# EUROPÄISCHE PATENTANMELDUNG

(11) **EP 0 990 403 A2**
(43) Veröffentlichungstag der Anmeldung: **05.04.2000**
(21) Anmeldenummer: 99118353.4
(22) Anmeldetag: 16.09.1999
(51) Int. Cl.: A47C 1/023

(54) **Sitzplatte für einen in seiner Sitztiefe verstellbaren Sitz**

(30) Priorität: 01.10.1998 DE 19845265
(71) Anmelder: Dauphin Entwicklungs- u. Beteiligungs-GmbH, 92259 Neukirchen (DE)
(72) Erfinder: Dauphin, Friedrich-W., 91238 Offenhausen (DE)
(74) Vertreter: Rau, Manfred, Dr. Dipl.-Ing.

(57) **Zusammenfassung**

Eine Sitzplatte für einen in seiner Sitztiefe verstellbaren Sitz, insbesondere eines Bürostuhls, besteht aus zwei Teilplatten (1, 2), deren Abstand voneinander in Richtung der Sitztiefe verstellbar und feststellbar ist. Insbesondere sind die Teilplatten (1, 2) mittels einer Führung (7) und einer lösbaren Verriegelung (12) miteinander verbunden, wodurch eine Sitztiefenverstellung in der im wesentlichen horizontalen Verstellrichtung (10) ermöglicht wird.

## Beschreibung

Die Erfindung betrifft eine Sitzplatte für einen in seiner Sitztiefe verstellbaren Sitz. Derartige in ihrer Sitztiefe verstellbare Sitze werden insbesondere bei Bürostühlen eingesetzt. Bei bekannten in ihrer Sitztiefe verstellbaren Bürostühlen erfolgt eine Tiefenverstellung der Rückenlehne. Dies hat den Nachteil, daß bei konturierten Sitzen die Ergonomie verlorengeht. Je nach Tiefenverstellung der Rückenlehne stimmt die Konturierung des Sitzes nicht mehr mit der Sitzposition des Benutzers überein. Wegen der großen Unterschiede in der Körpergröße von Benutzern solcher Bürostühle wird in der Praxis, beispielsweise durch den Entwurf der EN 1335, bereits eine Sitztiefenverstellung von mindestens 50 mm gefordert. Dies verschärft die angesprochenen ergonomischen Probleme.

Bei Autositzen ist es bekannt, die Sitztiefe mittels mit Druckluft aufblasbarer Schläuche bzw. Bälge zu verändern, die im Bereich der Vorderkante eines Sitzes angebracht sind. Diese Ausgestaltung setzt die Verfügbarkeit von Druckluft voraus. Darüber hinaus sind hiermit Sitztiefenverstellungen nur in einem Bereich weit unterhalb von 50 mm möglich.

Der Erfindung liegt daher die Aufgabe zugrunde, eine Sitzplatte der gattungsgemäßen Art so auszugstalten, daß mit einfachen Mitteln auch eine verhältnismäßig große Sitztiefenverstellung möglich ist.

Diese Aufgabe wird erfindungsgemäß durch die Merkmale im Kennzeichnungsteil des Anspruches 1 gelöst.

Durch die erfindungsgemäßen Maßnahmen wird erreicht, daß der feste Grundkörper eines Sitzes, nämlich die Sitzplatte selber, in ihren die Sitztiefe bestimmenden Abmaßen verändert wird. Insbesondere durch die Weiterbildung nach Anspruch 2 kann hierbei erreicht werden, daß die grundsätzliche Sitzkontur in allen Einstellungen erhalten bleibt, daß also die Kontur des Sitzes der Sitzfläche des Benutzers angepaßt bleibt. Nach Anspruch 3 erfolgt die Sitztiefenverstellung genau nur in der Richtung, in der die Sitztiefe des Sitzes selber verändert werden soll.

Die Unteransprüche geben vorteilhafte und zum Teil erfinderische Ausgestaltungen wieder.

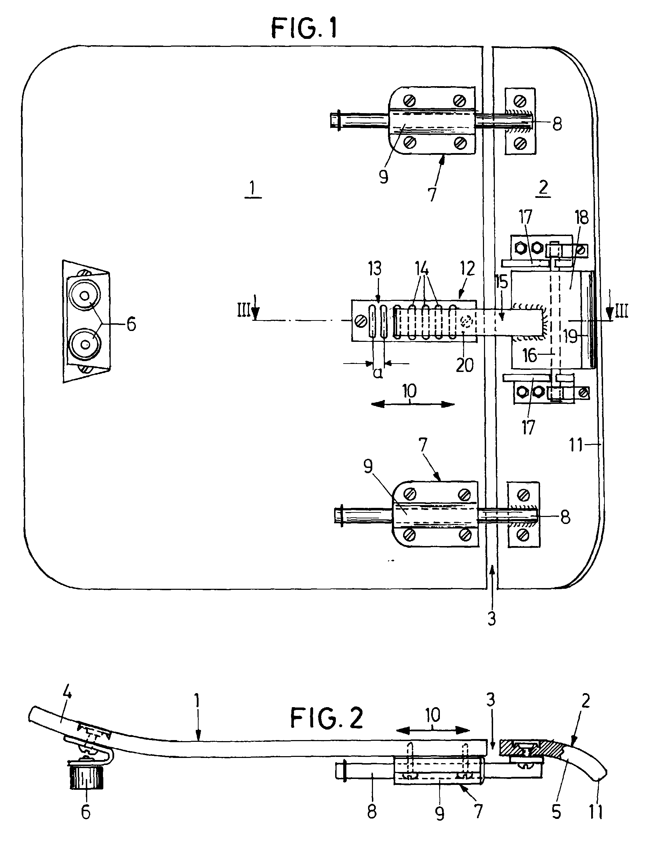

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Ansicht einer Sitzplatte von unten,
- Fig. 2: eine Seitenansicht der Sitzplatte, teilweise aufgebrochen,

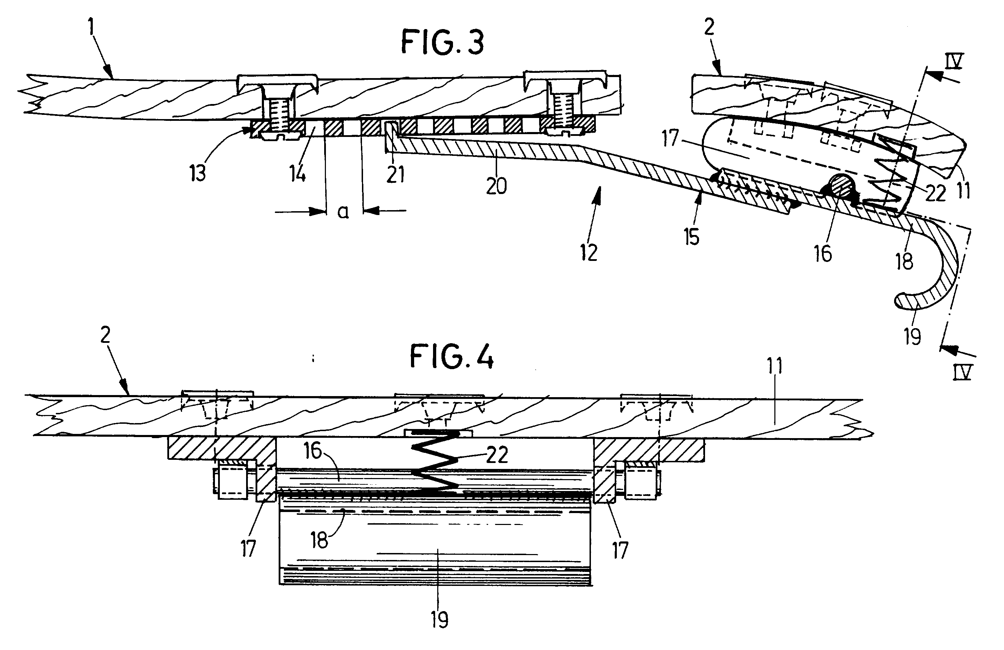

- Fig. 3: einen vertikalen Teil-Längsschnitt durch die Sitzplatte gemäß der Schnittlinie III-III in Fig. 1 und
- Fig. 4: einen vertikalen Teil-Querschnitt durch die Sitzplatte gemäß der Schnittline IV-IV in Fig. 3.

Die in der Zeichnung dargestellte Sitzplatte für einen in seiner Tiefe verstellbaren Sitz ist geteilt ausgebildet; sie besteht aus einer Hauptsitzplatte 1 und einer vorderen Randsitzplatte 2. Die gesamte Sitzplatte ist also in die Hauptsitzplatte 1 und die Randsitzplatte 2 unterteilt. Ihr Trennbereich 3 ist also im vorderen Sitzbereich ausgebildet. Die durch die Platten 1, 2 gebildete Gesamtsitzplatte ist konturiert ausgebildet, d. h. sie ist in ihrem hinteren Bereich 4 leicht nach oben gezogen und in ihrem vorderen Bereich 5 nach unten gebogen. Im hinteren Bereich 4 weist sie an ihrer Unterseite einen elastischen Puffer 6 zur Abstützung auf einem Sitzträger oder einem Rückenlehnenträger auf. Die übrigen Befestigungsmittel zur Abstützung bzw. Befestigung auf einem Sitzträger eines Stuhles sind nicht dargestellt.

Die Platten 1, 2 sind mittels zweier Führungen 7 miteinander verbunden. Diese weisen beispielsweise jeweils eine an der Randsitzplatte 2 angebrachte Führungsstange 8 und eine ebenfalls an der Unterseite der Hauptsitzplatte 1 angebrachte Führungsbüchse 9 auf, wobei die Führungsstangen 8 parallel zueinander und in Verstellrichtung 10, also etwa horizontal zur Sitztiefenverstellung, verlaufen. Diese Verstellrichtung 10 verläuft quer zum Trennbereich 3 bzw. der Vorderkante 11 der Randsitzplatte 2.

Ebenfalls an der Unterseite der Platte 1 ist eine lösbare Verriegelung 12 zur Fixierung der Randsitzplatte 2 in einem vorgegebenen Abstand von der Hauptsitzplatte 1 angebracht. Diese lösbare Verriegelung 12 weist eine an der Unterseite der Hauptsitzplatte 1 angebrachte, in Verstellrichtung 10 verlaufende Verriegelungsleiste 13 auf, die mit Verriegelungsöffnungen 14 versehen ist, die wiederum in geringen Abständen a voneinander in Verstellrichtung 10 hintereinander angeordnet sind. An der Unterseite der Randsitzplatte 2 ist ein Verriegelungshebel 15 mittels einer Schwenkachse 16 in einem an der Unterseite der Randsitzplatte 2 angebrachten Schwenklager 17 schwenkbar gelagert. Er ist als doppelarmiger Hebel ausgebildet, wobei der der Vorderkante 11 zugewandte Hebelarm 18 im Bereich der Vorderkante 11 der Randsitzplatte 2 einen Griff 19 aufweist. Der der Hauptsitzplatte 1 zugewandte Hebelarm 20 erstreckt sich unter die Verriegelungsleiste 13 und ist an seinem Ende mit einem nach oben ragenden, der Form der Verriegelungsöffnung 14 angepaßten Riegel 21 versehen. Zwischen der Randsitzplatte 2 und dem Hebelarm 18 ist eine vorgespannte Druckfeder 22 angeordnet, die den Hebelarm 18 von der Randsitzplatte 2 nach unten wegdrückt und damit den Hebelarm 20 mit dem Riegel 21 nach oben gegen die Verriegelungsleiste 13 drückt.

Zur Verstellung des Abstands der Randsitzplatte 2 von der Hauptsitzplatte 1 wird der Griff 19 zur Randsitzplatte 2 hingezogen, wodurch der Riegel 21 außer Eingriff mit einer Verriegelungsöffnung 14 der Verriegelungsleiste 13 kommt. Dann wird mittels des Griffs 19 die Randsitzplatte 2 in eine gewünschte Abstandsposition zur Hauptsitzplatte 1 gezogen und dann der Griff 19 losgelassen. Der Riegel 21 rastet dann wieder in eine andere Verriegelungsöffnung 14 der Verriegelungsleiste 13 ein, wodurch die Position der Randsitzplatte 2 zur Hauptsitzplatte 1 fixiert wird.

Die durch die Hauptsitzplatte 1 und die Randsitzplatte 2 gebildete Gesamtsitzplatte ist gepolstert und mit einem geeigneten Polsterbezug überzogen, der die geschilderten Abstandsveränderungen zwischen Randsitzplatte 2 und Hauptsitzplatte 1 und damit die erwünschte Sitztiefenverstellung durch die Art des Materials oder durch die Art der Polsterung aufnehmen kann.

Aus der vorstehenden Beschreibung ergibt sich auch, daß die Sitztiefenverstellung vom Benutzer eines Stuhles vorgenommen werden kann, während er auf dem Sitz sitzt.

Wie sich aus dem Vorstehenden ergibt, wird die Randsitzplatte 2 etwa in der Horizontalen gegenüber der Hauptsitzplatte 1 verschoben. Die lösbare Verriegelung kann in die Führung integriert sein und beispielsweise mittels eines Bowdenzuges betätigbar sein. Der Begriff lösbare Verriegelung beinhaltet nicht nur eine formschlüssige Feststellung, sondern auch eine kraftschlüssige Feststellung. Insbesondere bei einer kraftschlüssigen Feststellung kann diese stufenlos sein. Die Zahl der Stufen kann weitgehend beliebig gewählt werden.

## Patentansprüche

1. Sitzplatte für einen in seiner Sitztiefe verstellbaren Sitz, dadurch gekennzeichnet,
daß die Sitzplatte mindestens aus zwei Teilplatten (1, 2) besteht, deren Abstand voneinander in Richtung der Sitztiefe verstellbar und feststellbar ist.

2. Sitzplatte nach Anspruch 1, dadurch gekennzeichnet,
daß die Teilplatten durch eine Hauptsitzplatte (1) und eine vordere Randsitzplatte (2) gebildet sind.

3. Sitzplatte nach Anspruch 1 oder 2, dadurch gekennzeichnet,
daß die Teilplatten (1, 2) in Sitztiefen-Verstellrichtung (10) gegeneinander verstellbar sind.

4. Sitzplatte nach einem der Ansprüche 1 bis 3, dadurch gekennzeichnet,
daß die Teilplatten (1, 2) mittels einer Führung (7) und einer lösbaren Verriegelung (12) miteinander verbunden sind.

5. Sitzplatte nach Anspruch 4, dadurch gekennzeichnet,
daß die Führung (7) durch mindestens zwei an einer Teilplatte (2) befestigte, zueinander parallele Führungsstangen (8) und diese aufnehmende, an der anderen Teilplatte (1) angebrachte Führungsbüchsen (9) gebildet ist.

6. Sitzplatte nach Anspruch 4 oder 5, dadurch gekennzeichnet,
daß die lösbare Verriegelung (12) durch eine an der einen Teilplatte (1) angebrachte Verriegelungsleiste (13) und einen an der anderen Teilplatte (2) angebrachten, mit der Verriegelungsleiste (13) in Eingriff und außer Eingriff bringbaren Verriegelungshebel (15) gebildet ist.

7. Sitzplatte nach Anspruch 6, dadurch gekennzeichnet,
daß die Verriegelungsleiste (13) mit im Abstand (a) voneinander angeordneten Verriegelungsöffnungen (14) versehen ist und daß der Verriegelungshebel (15) einen mit jeweils einer Verriegelungsöffnung (14) in Eingriff bringbaren Riegel (21) aufweist.

8. Sitzplatte nach Anspruch 6 oder 7, dadurch gekennzeichnet,
daß der Verriegelungshebel (15) mittels einer Druckfeder (22) in eine Verriegelungsstellung gedrückt ist.

9. Sitzplatte nach einem der Ansprüche 4 bis 8, dadurch gekennzeichnet,
daß die Führung (7) an der Unterseite der Teilplatten (1, 2) angeordnet ist.

10. Sitzplatte nach einem der Ansprüche 4 bis 9, dadurch gekennzeichnet,
daß die lösbare Verriegelung (12) an der Unterseite der Teilplatten (1, 2) angeordnet ist.

11. Sitzplatte nach einem der Ansprüche 4 bis 10, dadurch gekennzeichnet,
daß die lösbare Verriegelung (12) im Bereich einer Vorderkante (11) einer vorderen Teilplatte (2) einen Griff (19) aufweist.
